# EUROPEAN PATENT APPLICATION

(11) **EP 4 617 824 A1**
(43) Date of publication of application: **17.09.2025**
(21) Application number: 23907710.0
(22) Date of filing: 20.12.2023
(51) Int. Cl.: G06F 1/20, H02J 7/00, G06F 11/30, G06F 3/0484

(54) **ELECTRONIC DEVICE AND CONTROL METHOD THEREFOR**

(30) Priority: 21.12.2022 KR 20220180989; 07.09.2023 KR 20230118788
(71) Applicant: LG Electronics Inc., Yeongdeungpo-gu Seoul 07336 (KR)
(72) Inventor: CHO, Donghyuk, Seoul 06772 (KR); JUNG, Jaejun, Seoul 06772 (KR); KYUNG, Donggu, Seoul 06772 (KR); KANG, Munku, Seoul 06772 (KR); CHOI, Dongjoon, Seoul 06772 (KR); ROH, Sungjae, Seoul 06772 (KR); KIM, Sungbin, Seoul 06772 (KR); LEE, Byeongyeong, Seoul 06772 (KR); KIM, Jihan, Seoul 06772 (KR); AN, Byeongduk, Seoul 06772 (KR)
(74) Representative: Vossius & Partner Patentanwälte Rechtsanwälte mbB
(86) International application number: PCT/KR2023/021047
(87) International publication number: WO 2024/136427

(57) **Abstract**

The present disclosure may provide an electronic device which is for automatically determining the operating performance of a CPU and a cooling module of the electronic device according to at least one of the CPU's computational load, charging state, operating state, and usage environment, and comprises a control unit including a CPU, a board on which the CPU is mounted, a cooling module, a temperature sensor for sensing the CPU temperature and the board temperature, and a battery, wherein the control unit determines differently, depending on the charging state of the battery, at least one of a power level related to power consumption of the CPU and a cooling level related to cooling performance of the cooling module.

## Description

### TECHNICAL FIELD

The present disclosure relates to a method of controlling performance and/or temperature of an electronic device and an electronic device that implements the same.

### BACKGROUND

An electronic device includes a main circuit board and numerous electronic components and can perform an operation while transmitting and receiving electrical signals therebetween.

Through this process, heat is inevitably generated in an electronic device, and the amount of heat generated may increase depending on a degree by which the electronic device operates.

Excessive heat generated from the electronic device increases the surrounding temperature and may cause harm or discomfort to a user who accidentally touches the electronic device. Excessive heat may reduce the durability of the electronic device.

Accordingly, many electronic devices include one or more cooling modules, such as fans, and a technology is used to reduce heat generation in the electronic device by controlling a rotation speed of the fan.

One of the most important sources of heat generation on the main circuit board is a central processing unit (CPU) (or application processor (AP)).

When power consumed by the CPU is limited to reduce heat generation in the electronic device, the computational performance of the CPU may deteriorate, which may cause a deterioration in the overall performance of the electronic device.

However, when the rotation speed of the fan is increased to lower heat generation of the electronic device while maintaining or increasing the power consumed by the CPU, noise caused by rotation of the fan may increase, causing discomfort to the user.

For this reason, the electronic device may provide the user with a plurality of operating modes (e.g., high performance mode, recommended mode, low noise mode, or silent mode) regarding the performance of the CPU and the cooling module and may operate according to an operating mode selected by the user from among the operating modes. However, it is inconvenient for a user to manually select one operating mode from among a plurality of operating modes by determining a computing load required by the electronic device every time the electronic device is used, predicting power consumption of the CPU appropriate for the computing load, and checking a usage environment of the user.

### DISCLOSURE

### Technical Problem

The present disclosure is proposed to resolve the problem and provides an electronic device and a method of controlling the same, which automatically determine the operating performance of a central processing unit (CPU) and a cooling module of an electronic device according to at least one of a computing load of the CPU or of the electronic device, a charging state of the electronic device, an operating state of the electronic device, or a usage environment of the electronic device.

### Technical Solution

To achieve the above object, the present disclosure provides an electronic device including a controller including a central processing unit (CPU), a board equipped with the CPU, a cooling module, a temperature sensor configured to sense a CPU temperature and a board temperature, and a battery, wherein the controller is configured to differently determine at least one of a power level regarding power consumption of the CPU or a cooling level regarding cooling performance of the cooling module depending on a charging state of the battery.

The controller may be configured to perform control, when the board temperature exceeds a first temperature and the CPU temperature exceeds a second temperature higher than the first temperature, to adjust at least one of the power level of the CPU or the cooling level of the cooling module.

The controller may be configured to perform control, when the CPU temperature exceeds the second temperature for a first time interval or longer, to adjust at least one of the power level of the CPU or the cooling level of the cooling module.

The controller may be configured to perform control to differently adjust at least one of the power level of the CPU or the cooling level of the cooling module depending on whether the electronic device is in a charging mode or a non-charging mode.

The controller may be configured to perform control, when the electronic device is in the charging mode, to differently adjust at least one of the power level or the cooling level of the cooling module according to a charging level of the battery.

The cooling level may be adjusted to be inversely proportional to the charging level of the battery, and the power level may be adjusted to be proportional to the charging level of the battery.

The controller may be configured to perform control, when the board temperature exceeds a third temperature between the first temperature and the second temperature and the CPU temperature exceeds the second temperature for a second time interval longer than a first time interval, to further adjust at least one of the power level of the CPU or the cooling level of the cooling module.

The electronic device may further include a microphone configured to measure ambient noise, wherein the controller is configured to perform control to further adjust at least one of the power level of the CPU or the cooling level of the cooling module according to a size of the ambient noise.

The ambient noise may not include a user voice recognized through artificial intelligence learning.

The cooling level and the power level may be adjusted in proportion to the size of the ambient noise.

The electronic device may further include an acceleration sensor configured to sense an acceleration value of the electronic device, and the controller may be configured to perform control to further adjust at least one of the power level of the CPU or the cooling level of the cooling module according to a mounting state of the electronic device determined based on the acceleration value.

When the acceleration value is greater than or equal to a reference value, the power level may be adjusted to be lowered.

The controller may be configured to perform control to further adjust at least one of the power level of the CPU or the cooling level of the cooling module according to a type of an application currently executed.

When only a background application is executed, at least one of the cooling level or the power level may be adjusted to be lowered.

The controller may be configured to perform control to further adjust at least one of the power level of the CPU or the cooling level of the cooling module according to a location of the electronic device.

To achieve the above object, the present disclosure provides a method of controlling an electronic device, the method including sensing a central processing unit (CPU) temperature of a CPU and a board temperature of a board equipped with the CPU, checking a charging state of a battery, and differently determining at least one of a power level regarding power consumption of the CPU or a cooling level regarding cooling performance of the cooling module depending on the charging state of the battery.

### Advantageous Effects

Effects of an electronic device and a method of controlling the same according to the present disclosure are as follows.

According to an aspect of the present disclosure, there is an advantage in that the operating performance of a central processing unit (CPU) and cooling module of the electronic device may be automatically determined according to at least one of a computing load of the CPU of the electronic device, a charging state of the electronic device, an operating state of the electronic device, or a usage environment of the electronic device.

### BRIEF DESCRIPTION OF THE DRAWINGS

FIG. 1 is a block diagram related to the present disclosure.
FIG. 2 illustrates an example of a plurality of operating modes that are to be provided in an electronic device related to the present disclosure.
FIG. 3 illustrates an example of a power consumption level of a central processing unit (CPU) and a cooling level of a cooling module according to an aspect of the present disclosure.
FIG. 4 is a detailed example of each cooling level of FIG. 3.
FIG. 5 illustrates an example of a cooling level of a cooling module and a power consumption level of a CPU, which are selected according to a charging state of an electronic device according to an aspect of the present disclosure.
FIGS. 6 and 7 are flowcharts for determining a cooling level of a cooling module and a power consumption level of a CPU, which are to be applied to an electronic device according to an aspect of the present disclosure.
FIG. 8 is a flowchart for adjusting a cooling level of a cooling module and/or a power consumption level of a CPU, which is to be applied to an electronic device, based on a first condition according to an aspect of the present disclosure.
FIGS. 9 and 10 are graphs showing acceleration values of an electronic device according to a mounting state.
FIG. 11 is a flowchart for adjusting a cooling level of a cooling module and/or a power consumption level of a CPU, which is to be applied to an electronic device, based on a second condition according to an aspect of the present disclosure.
FIG. 12 is a flowchart for adjusting a cooling level of a cooling module and/or a power consumption level of a CPU, which is to be applied to an electronic device, based on a third condition according to an aspect of the present disclosure.
FIG. 13 is a flowchart for adjusting a cooling level of a cooling module and/or a power consumption level of a CPU, which is to be applied to an electronic device, based on a fourth condition according to an aspect of the present disclosure.

### MODE FOR INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Each of these elements may be configured as a separate individual hardware module or implemented as two or more hardware modules. Two or more elements may be implemented as a single hardware module. In some cases, at least one of these elements may be implemented as software.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

In this disclosure, the expression "at least one of A or B" may mean "A", "B", or "A and B".

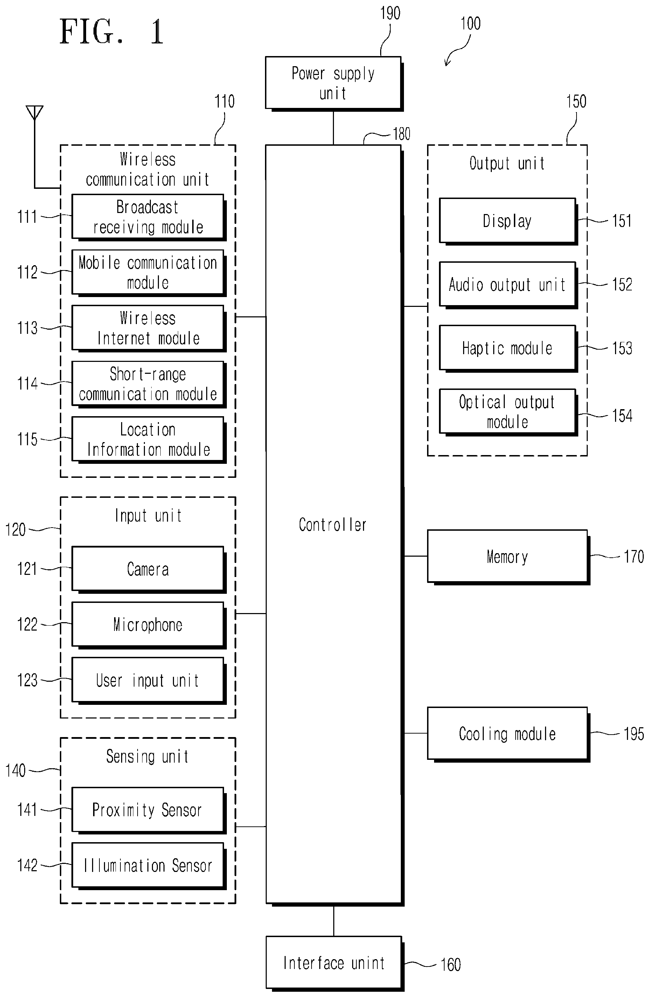

Referring to FIG. 1, an electronic device related to the present disclosure will be described.

FIG. 1 is a block diagram related to the present disclosure.

The electronic device 100 is shown having components such as a wireless communication unit 110, an input unit 120, a sensing unit 140, an output unit 150, an interface unit 160, a memory 170, a controller 180, a power supply unit 190 and a cooling module 195.

It is understood that implementing all of the illustrated components in fig. 1 is not a requirement, and that greater or fewer components may alternatively be implemented.

The wireless communication unit 110 typically includes one or more modules which permit communications such as wireless communications between the electronic device 100 and a wireless communication system, communications between the electronic device 100 and another electronic device, communications between the electronic device 100 and an external server. Further, the wireless communication unit 110 typically includes one or more modules which connect the electronic device 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The location information module 115 is generally configured to detect, calculate, derive or otherwise identify a position of the electronic device. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the electronic device.

As one example, when the electronic device uses a GPS module, a position of the electronic device may be acquired using a signal sent from a GPS satellite. As another example, when the electronic device uses the Wi-Fi module, a position of the electronic device can be acquired based on information related to a wireless access point (AP) which transmits or receives a wireless signal to or from the Wi-Fi module.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The microphone 122 is generally implemented to permit audio input to the electronic device 100. The audio input can be processed in various manners according to a function being executed in the electronic device 100. If desired, the microphone 122 may include assorted noise removing algorithms to remove unwanted noise generated in the course of receiving the external audio

The sensing unit 140 is typically implemented using one or more sensors configured to sense internal information of the electronic device, the surrounding environment of the electronic device, user information, and the like.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The electronic device 100 may be configured to utilize information obtained from sensing unit 140, and in particular, information obtained from one or more sensors of the sensing unit 140, and combinations thereof.

In particular, the sensing unit 140 may include a board temperature sensor configured to measure the temperature of the main circuit board of the electronic device (hereinafter referred to as the board temperature), and a CPU temperature sensor configured to measure the temperature of a CPU (or AP) that is to be mounted on the main circuit board (hereinafter referred to as the CPU temperature). The CPU temperature sensor may also be configured within the CPU.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the electronic device 100 and a user, as well as function as the user input unit 123 which provides an input interface between the electronic device 100 and the user.

The interface unit 160 serves as an interface with various types of external devices that can be coupled to the electronic device 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the electronic device 100 may perform assorted control functions associated with a connected external device, in response to the external device being connected to the interface unit 160.

The memory 170 is typically implemented to store data to support various functions or features of the electronic device 100. For instance, the memory 170 may be configured to store application programs executed in the electronic device 100, data or instructions for operations of the electronic device 100, and the like. Some of these application programs may be downloaded from an external server via wireless communication. Other application programs may be installed within the electronic device 100 at time of manufacturing or shipping, which is typically the case for basic functions of the electronic device 100 (for example, receiving a call, placing a call, receiving a message, sending a message, and the like). It is common for application programs to be stored in the memory 170, installed in the electronic device 100, and executed by the controller 180 to perform an operation (or function) for the electronic device 100.

The controller 180 typically functions to control overall operation of the electronic device 100, in addition to the operations associated with the application programs.

The controller 180 may provide or process information or functions appropriate for a user by processing signals, data, information and the like, which are input or output by the various components depicted in Fig. 1, or activating application programs stored in the memory 170. The controller 180 may include a CPU (or AP) that is to be mounted on the main circuit board of the electronic device.

The power supply unit 190 can be configured to receive external power or provide internal power in order to supply appropriate power required for operating elements and components included in the electronic device 100. The power supply unit 190 may include a battery, and the battery may be configured to be embedded in the device body, or configured to be detachable from the device body.

The cooling module 195 is to lower the temperature inside the electronic device under control of the controller 180. The cooling module 195 may include an air-cooled cooling module and a water-cooled cooling module. The air-cooled cooling module may include a fan for air circulation, and the water-cooled cooling module may include a motor for coolant circulation. The fan and the motor are similar in that the fan and the motor may both produce noise during operations.

Artificial intelligence (AI) may be utilized to automatically select operating performance in an electronic device.

Hereinafter, AI will be described in more detail.

Artificial Intelligence (AI) refers to a field that studies artificial intelligence or methodology capable of achieving artificial intelligence. Machine learning refers to a field that defines various problems handled in the AI field and studies methodology for solving the problems. Machine learning may also be defined as an algorithm for raising performance for any task through steady experience of the task.

An artificial neural network (ANN) may refer to a model in general having problem solving capabilities, that is composed of artificial neurons (nodes) constituting a network by a combination of synapses, as a model used in machine learning. The ANN may be defined by a connection pattern between neurons of different layers, a learning process of updating model parameters, and/or an activation function for generating an output value.

The ANN may include an input layer, an output layer, and, optionally, one or more hidden layers. Each layer includes one or more neurons and the ANN may include a synapse connecting neurons. In the ANN, each neuron may output input signals, which are input through the synapse, weights, and function values of an activation function for deflection.

A model parameter refers to a parameter determined through learning and includes a weight of synaptic connection and a deflection of a neuron. A hyperparameter refers to a parameter that should be configured before learning in a machine learning algorithm and includes a learning rate, the number of repetitions, a mini batch size, an initialization function, and the like.

The purpose of learning of the ANN may be understood as determining the model parameter that minimizes a loss function. The loss function may be used as an index to determine an optimal model parameter in a learning process of the ANN.

Machine learning may be classified into supervised learning, unsupervised learning, and reinforcement learning, according to a learning scheme.

Supervised learning refers to a method of training the ANN in a state in which a label for training data is given. The label may represent a correct answer (or result value) that the ANN should infer when the training data is input to the ANN. Unsupervised learning may refer to a method of training the ANN in a state in which the label for the training data is not given. Reinforcement learning may refer to a learning method in which an agent defined in a certain environment is trained to select a behavior or a behavior order that maximizes accumulative compensation in each state.

Among ANNs, machine learning implemented as a deep neural network (DNN) including a plurality of hidden layers is also called deep learning. Deep learning is a part of machine learning. Hereinbelow, machine learning includes deep learning.

An object detection model using machine learning includes a you only look once (YOLO) model of a single-step scheme, a faster region with convolution neural networks (R-CNN) model of a two-step scheme, and the like.

The you only look once (YOLO) model is a model in which an object existing in an image and a position of the corresponding object may be predicted as the image is viewed only once.

The you only look once (YOLO) model divides the original image into grids of the same size. Then, for each grid, the number of bounding boxes specified in a predefined form around a center of the grid is predicted, and reliability is calculated based on the predicted number.

Thereafter, whether the image contains the object or contains only a background may be included, and a location with high object reliability may be selected, so that an object category may be identified.

The faster regions with convolution neural networks (R-CNN) model is a model that may detect the object faster than an RCNN model and a Fast RCNN model.

The faster regions with convolution neural networks (R-CNN) model will be described in detail.

First, a feature map is extracted from the image via a convolution neural network (CNN) model. Based on the extracted feature map, a plurality of regions of interest (RoIs) are extracted. RoI pooling is performed for each region of interest.

The RoI pooling is a process of setting grids of a feature map to which the regions of interest are projected to fit a H x W size that is determined in advance and extracting the greatest value for each cell included in each grid to extract a feature map having the H x W size.

A feature vector may be extracted from the feature map having the H x W size, and identification information of the object may be obtained from the feature vector.

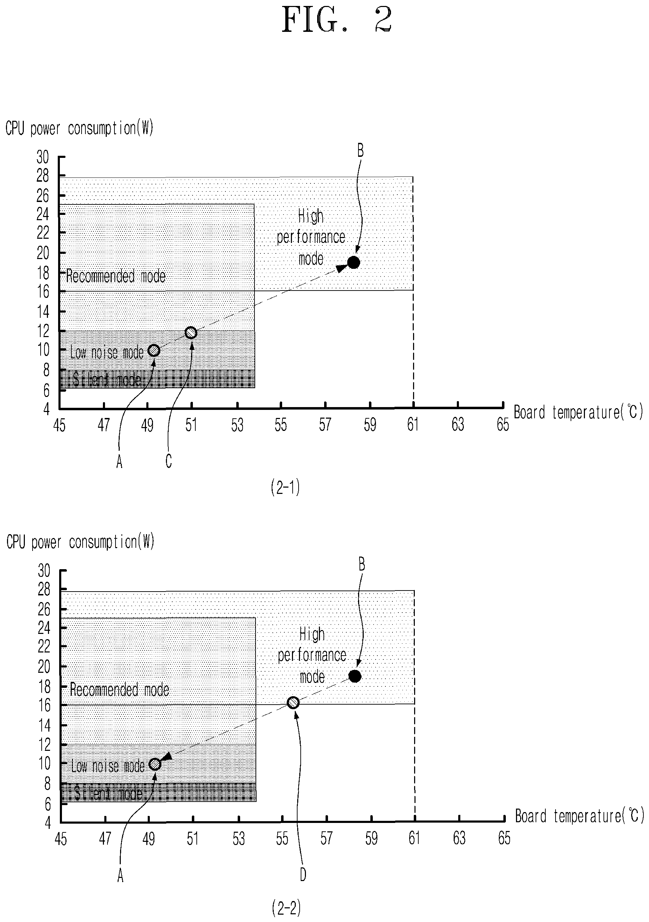

Hereinafter, with reference to FIG. 2, a plurality of operating modes in an electronic device will be described. FIG. 2 illustrates an example of a plurality of operating modes that are to be provided in an electronic device related to the present disclosure.

In the electronic device, power consumption of the CPU may be controlled by controlling a voltage and/or clock speed of the CPU. The plurality of operating modes may be predefined to determine an allowable range of power consumption of the CPU. A range of board temperatures allowed in each operating mode may be defined.

For example, as shown in (2-1) of FIG. 2, a high performance mode, a recommended mode, a low noise mode, and a silent mode may be predefined as the plurality of operating modes. More or fewer modes than these may be predefined as the plurality of operating modes.

In the drawing, for the high performance mode, power consumption of the CPU is allowed to be within a range of about 16 to 28 watts and the board temperature is allowed to be up to about 61 degrees.

In the drawing, for the recommended mode, power consumption of the CPU is allowed to be within a range of about 12 to 25 watts and the board temperature is allowed to be up to about 54 degrees.

In the drawing, for the low noise mode, power consumption of the CPU is allowed to be within a range of about 8 to 12 watts and the board temperature is allowed to be up to about 54 degrees.

In the drawing, for the silent mode, power consumption of the CPU is allowed to be within a range of about 6 to 8 watts and the board temperature is allowed to be up to about 54 degrees.

In each operating mode, a rotation speed range of the fan (or motor) of the cooling module may be defined to maintain the temperature within the corresponding maximum allowable board temperature.

For example, it is assumed that the user has manually set the electronic device 100 to operate in a low noise mode. It is assumed that the electronic device 100 drives the CPU with power consumption corresponding to point A, and the cooling module operates to maintain the board temperature corresponding to point A.

While the low noise mode is maintained, a high-spec program (or application) with a computational load suitable for point B may be executed on the electronic device 100. The executed high-spec program may be, for example, an editing program for high-definition video or a high-definition game program.

However, the electronic device 100 is set to the low noise mode, and thus the CPU of the electronic device 100 may only consume up to the maximum power consumption (about 12 W) defined in the low noise mode as indicated by point C. Therefore, the electronic device 100 may not properly execute the high-spec program.

Conversely, as shown in (2-2) of FIG. 2, for example, it is assumed that a user manually sets the electronic device 100 to operate in the high performance mode. It is assumed that the electronic device 100 drives the CPU with power consumption corresponding to point B, and the cooling module operates to maintain the board temperature corresponding to point B.

While the low noise mode is maintained, a low-spec program with a computing load suitable for point A may be executed on the electronic device 100. The executed low-spec program may be, for example, a document editing program.

However, the electronic device 100 is set to the high performance mode, and thus even if the electronic device 100 executes the low-spec program, the CPU may inevitably consume the minimum power consumption (about 16 W) defined in the high performance mode as indicated by point D. Even if the electronic device 100 needs to operate the cooling module at high speed to match the high performance mode even though the low-spec program is executed, which may cause unnecessary noise in the electronic device 100.

In addition to the plurality of operating modes, the present disclosure newly proposes an automatic mode in which a power consumption level of the CPU and a cooling level of the cooling module (e.g., a rotation level of a fan or motor) in the electronic device 100 are to be automatically set.

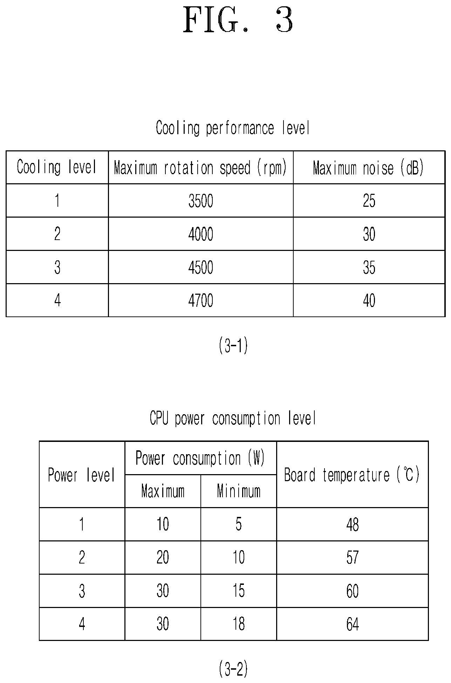

Hereinafter, examples of the power consumption level of the CPU and the cooling level of the cooling module according to an aspect of the present disclosure will be described. FIG. 3 illustrates an example of a power consumption level of a CPU and a cooling level of a cooling module according to an aspect of the present disclosure.

Hereinafter, it is assumed that the cooling module is air-cooled and includes a fan for air circulation. However, the description below may also be applied to the cooling module that is water-cooled and include a motor for coolant circulation.

A plurality of cooling levels may be predefined for the cooling module. The cooling level may also be understood as a cooling performance level of the cooling module. For example, as illustrated in (3-1) of FIG. 3, four cooling levels, i.e., a first cooling level, a second cooling level, a third cooling level, and a fourth cooling level, may be predefined. However, there may be less or more cooling levels than this.

In the drawing, for the first cooling level, the cooling module rotates at a speed of up to 3500 rpm and a noise of about 25 dB is typically expected to be generated when rotating at the maximum speed.

In the drawing, for the second cooling level, the cooling module rotates at a speed of up to 4000 rpm and a noise of about 30 dB is typically expected to be generated when rotating at the maximum speed.

In the drawing, for the third cooling level, the cooling module rotates at a speed of up to 4500 rpm and a noise of about 35 dB is typically expected to be generated when rotating at the maximum speed.

In the drawing, for the fourth cooling level, the cooling module rotates at a speed of up to 4700 rpm and a noise of about 40 dB is typically expected to be generated when rotating at the maximum speed.

A plurality of power consumption levels of the CPU (hereinafter, also referred to as power levels) may be predefined for the CPU. For example, as illustrated in (3-2) of FIG. 3, four power consumption levels, i.e., a first power level, a second power level, a third power level, and a fourth power level, may be predefined. However, there may be less or more power levels than this.

In the drawing, for the first power level, the CPU operates such that power consumption is 5 W to 10 W and the board temperature is expected to typically rise to about 48 °C at the maximum power consumption.

In the drawing, for the second power level, the CPU operates such that power consumption is 10 W to 20 W and the board temperature is expected to typically rise to about 57 °C at the maximum power consumption.

In the drawing, for the third power level, the CPU operates such that power consumption is 15 W to 30 W and the board temperature is expected to typically rise to about 60 °C at the maximum power consumption.

In the drawing, for the fourth power level, the CPU operates such that power consumption is 18 W to 30 W and the board temperature is expected to typically rise to about 64 °C at the maximum power consumption.

The controller 180 may control the electronic device 100 to operate according to one of the first to fourth cooling levels and one of the first to fourth power levels.

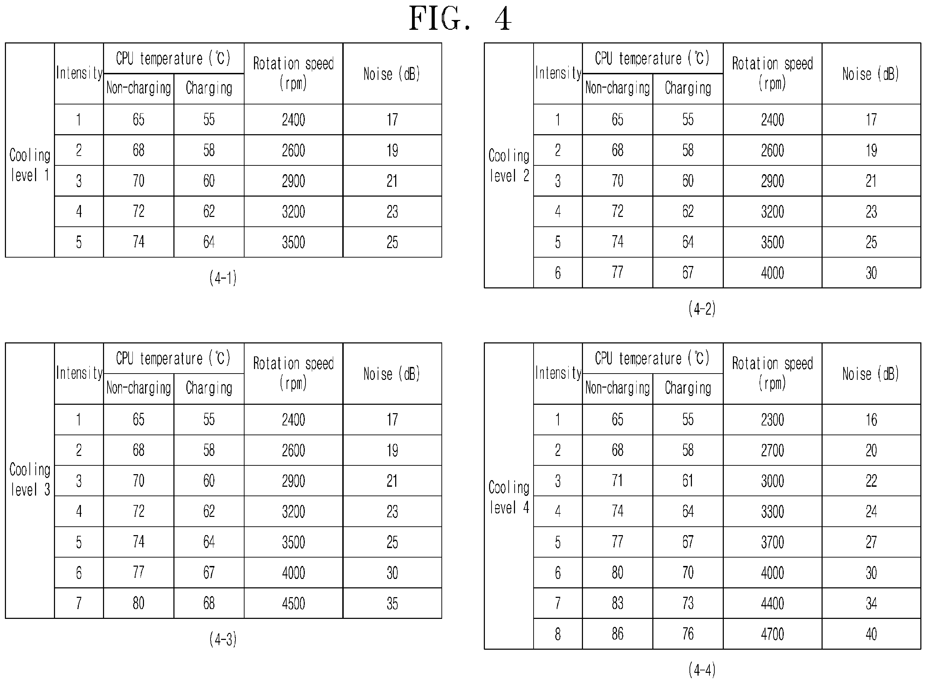

Each cooling level may be defined such that the rotation speed varies depending on the CPU temperature without exceeding the maximum rotation speed of the cooling module. This will be further explained with reference to FIG. 4. FIG. 4 is a detailed example of each cooling level of FIG. 3.

As shown in (4-1) of FIG. 4, in the case of the first cooling level, the cooling module may be driven at an intensity selected from first to fifth intensities depending on the CPU temperature.

As shown in (4-2) of FIG. 4, in the case of the second cooling level, the cooling module may be driven at an intensity selected from first to sixth intensities depending on the CPU temperature.

As shown in (4-3) of FIG. 4, in the case of the third cooling level, the cooling module may be driven at an intensity selected from first to seventh intensities depending on the CPU temperature.

As shown in (4-4) of FIG. 4, in the case of the fourth cooling level, the cooling module may be driven at an intensity selected from first to eighth intensities depending on the CPU temperature.

The drawing illustrates that the CPU temperature that determines the intensity in each cooling level varies depending on whether the electronic device 100 is charging or not and the expected noise according to each intensity.

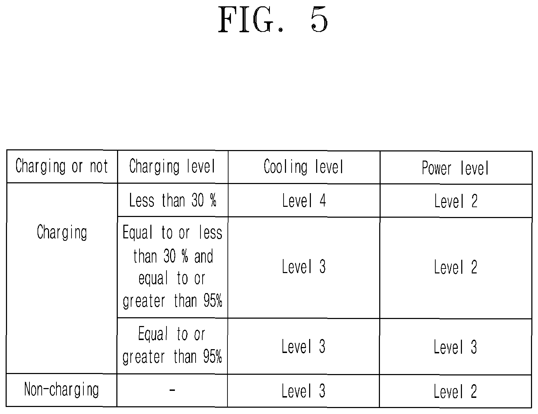

Depending on whether the electronic device 100 is currently charged or not, when the electronic device 100 is currently charged, one cooling level from among the plurality of cooling levels and one power level from among the plurality of power levels may be selected according to a charging level, and the electronic device 100 may operate according to the selected cooling level and power level. This will be further explained with reference to FIG. 5. FIG. 5 illustrates an example of a cooling level of a cooling module and a power consumption level of a CPU, which are selected according to a charging state of an electronic device according to an aspect of the present disclosure.

When the electronic device 100 is connected to a power outlet and a battery of the electronic device 100 is currently charged (i.e., when the electronic device 100 operates in a charging mode), the cooling level and the power level may be selected differently depending on a charging level of the electronic device 100.

For example, when the charging level of the electronic device 100 is less than 30 %, the fourth cooling level may be selected and the second power level may be selected.

When the charging level of the electronic device 100 is 30 % or more and less than 95 %, the third cooling level may be selected and the third power level may be selected.

When the charging level of the electronic device 100 is equal to or greater than 95 %, the third cooling level may be selected and the second power level may be selected.

When the electronic device 100 is not connected to a power outlet and the battery of the electronic device 100 is not currently charged (i.e., the electronic device 100 operates in a non-charging mode), the third cooling level may be selected and the second power level may be selected.

A number of the charging level may be an example and may be changed. The cooling level and power level at each charging state are exemplary only, and different cooling levels and/or different power levels may be applied at each charging state.

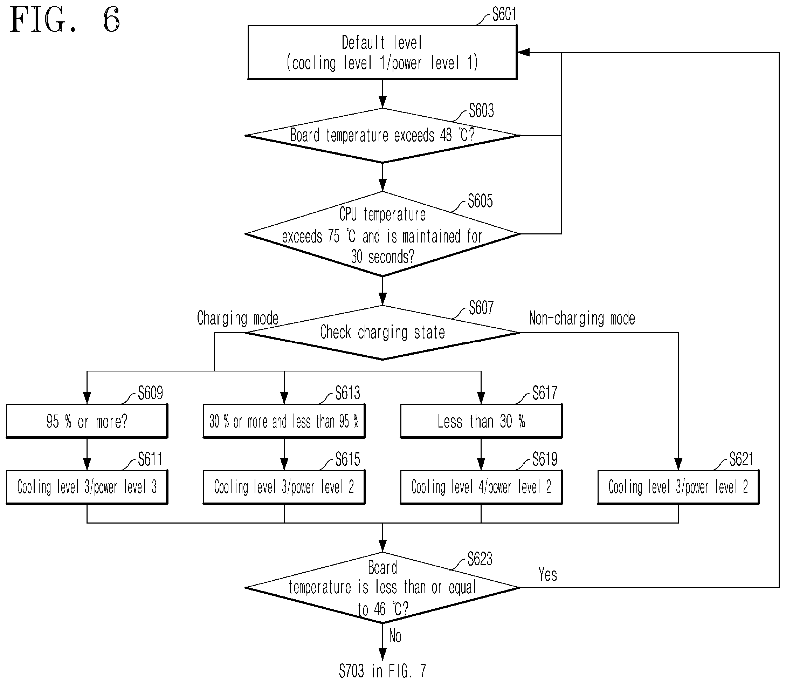

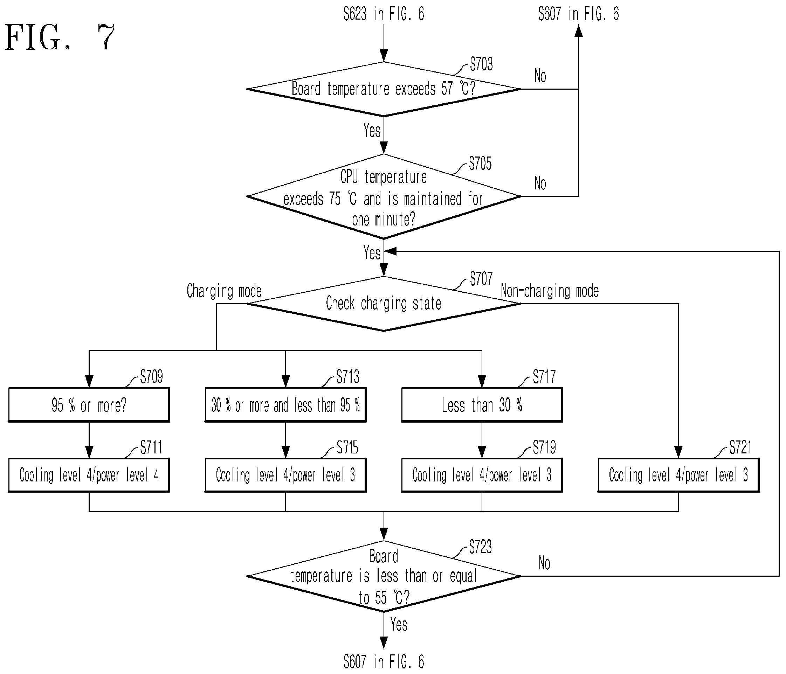

When the cooling level and power level in each charging state illustrated in FIG. 5 are applied to the electronic device 100, the board temperature and the CPU temperature may be further considered. This will be further explained with reference to FIGS. 6 and 7. FIGS. 6 and 7 are flowcharts for determining a cooling level of a cooling module and a power consumption level of a CPU, which are to be applied to an electronic device according to an aspect of the present disclosure.

The controller 180 may control the electronic device 100 to operate according to a default cooling level and a default power level [S601]. In FIG. 6, the default cooling level and the default power level are exemplified as the first cooling level and the first power level, respectively, but are not limited thereto.

The controller 180 may determine whether the board temperature of the electronic device 100 exceeds the first temperature (e.g., 48 degrees) [S603].

When the board temperature does not exceed a first temperature, the controller 180 may control the electronic device 100 to continue to operate according to the default cooling level and the default power level [S601].

When the board temperature exceeds the first temperature, the controller 180 may determine whether the CPU temperature of the electronic device 100 exceeds a second temperature (e.g., 75 degrees) and is maintained for a first time interval (e.g., 30 seconds) [S605]. The second temperature may be higher than the first temperature.

When the CPU temperature does not exceed the second temperature for the first time interval, the controller 180 may control the electronic device 100 to continue to operate according to the default cooling level and the default power level [S601].

When the CPU temperature exceeds the second temperature and is maintained for the first time interval, the controller 180 may control the electronic device 100 to operate at another cooling level and/or another power level based on the charging state of the electronic device 100.

That is, the controller 180 may check the charging state of the electronic device 100 [S607].

For example, when the electronic device 100 is in a charging mode and the battery of the electronic device 100 is determined to be charged to a first charging level (e.g., 95 %) or higher, the controller 180 may control the electronic device 100 to operate according to the third cooling level and the third power level [S609 and S611].

When the electronic device 100 is in a charging mode and the battery of the electronic device 100 is determined to be charged to a second charging level (e.g., 30 %) or higher and less than the first charging level, the controller 180 may control the electronic device 100 to operate according to the third cooling level and the second power level [S613 and S615].

When the electronic device 100 is in a charging mode and the battery of the electronic device 100 is determined to be charged below the second charging level, the controller 180 may control the electronic device 100 to operate according to the fourth cooling level and the second power level [S617 and S619].

That is, a higher cooling level is selected when a charging level is low than when the charging level is high, and thus a factor for heat generation of the electronic device 100 may be reduced by selecting a lower power level. This is in consideration of the fact that when the charging level is low, the charging speed increases, which may increase the heat generation of the electronic device 100 due to charging.

When the electronic device 100 is in a non-charging mode, the controller 180 may control the electronic device 100 to operate according to the third cooling level and the second power level [S621].

Then, the controller 180 may determine whether the board temperature is less than or equal to a third temperature (e.g., 46 degrees) [S623]. The third temperature may be lower than the first temperature.

When the board temperature is less than the third temperature, the controller 180 may control the electronic device 100 to operate according to the default cooling level and the default power level [S601].

However, when the board temperature is not less than the third temperature, the controller 180 may determine whether the board temperature exceeds a fourth temperature (e.g., 57 degrees) [S703]. The fourth temperature may be between the first temperature and the second temperature.

When the board temperature does not exceed the fourth temperature, the process may return to operation S607.

When the board temperature exceeds the fourth temperature, the controller 180 may determine whether the CPU temperature of the electronic device 100 exceeds the second temperature and is maintained for a second time interval (e.g., 1 minute) [S705]. The second time interval may be longer than the first time interval. Operation S705 may be for determining whether a high-spec program with a large computing load is currently executed in the electronic device 100.

When the CPU temperature of the electronic device 100 does not exceed the second temperature for the second time interval, the process may return to operation S607.

When the CPU temperature exceeds the second temperature and is maintained for the second time interval, the controller 180 may control the electronic device 100 to operate at another cooling level and/or another power level based on the charging state of the electronic device 100. The fact that the second time interval is maintained while the CPU temperature exceeds the second temperature may be inferred to mean that a high-spec program with a large computing load is currently executed in the electronic device 100.

That is, the controller 180 may check the charging state of the electronic device 100 [S707].

For example, when the electronic device 100 is in a charging mode and the battery of the electronic device 100 is determined to be charged to the first charging level or higher, the controller 180 may control the electronic device 100 to operate according to the fourth cooling level and the fourth power level [S709 and S711].

When the electronic device 100 is in a charging mode and the battery of the electronic device 100 is determined to be charged to the second charging level or higher and less than the first charging level, the controller 180 may control the electronic device 100 to operate according to the fourth cooling level and the fourth power level [S713 and S715].

When the electronic device 100 is in a charging mode and the battery of the electronic device 100 is determined to be charged below the second charging level, the controller 180 may control the electronic device 100 to operate according to the fourth cooling level and the third power level [S717 and S719].

When the electronic device 100 is in a non-charging mode, the controller 180 may control the electronic device 100 to operate according to the fourth cooling level and the fourth power level [S721].

It may be seen that the corresponding cooling levels of operations S711, S715, S719, and S721 are equal to or higher than operations S611, S615, S619, and S621 above.

Then, the controller 180 may determine whether the board temperature is less than or equal to a fifth temperature (e.g., 55 degrees) [S723]. The fifth temperature may be higher than the first temperature and lower than the fourth temperature.

When the board temperature is equal to or greater than the fifth temperature, the process may return to operation S607.

When the board temperature is not equal to or greater than the fifth temperature, the process may return to operation S707.

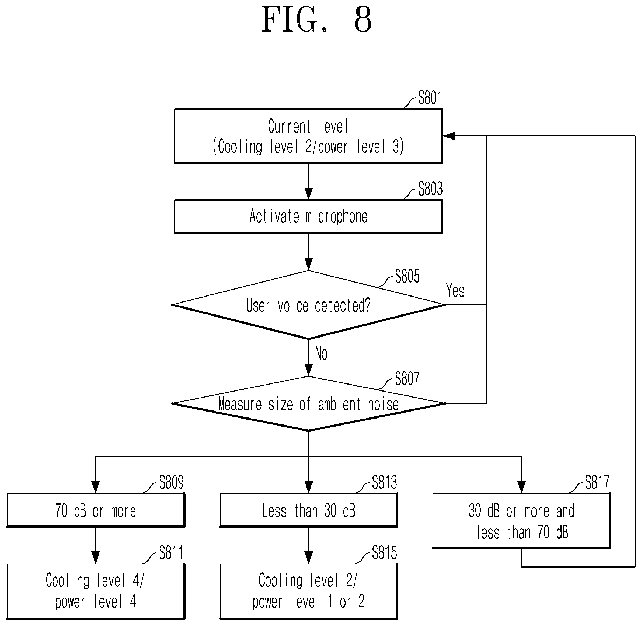

The cooling level and/or power level for the electronic device 100 determined as such may be readjusted depending on another first condition (ambient noise condition). For example, the cooling level and/or power level for the electronic device 100 may be adjusted depending on the ambient noise of a user using the electronic device 100. The adjustment of the cooling level and/or power level for the electronic device 100 according to the first condition will be further described with reference to FIG. 8. FIG. 8 is a flowchart for adjusting a cooling level of a cooling module and/or a power consumption level of a CPU, which is to be applied to an electronic device, based on a first condition according to an aspect of the present disclosure.

As described above, it is assumed that the second cooling level and the third power level are determined for the electronic device 100 [S801].

The controller 180 may sense audio by activating the microphone 122 [S803].

The controller 180 may determine whether a user voice is detected in the sensed audio [S805]. The user voice may be prestored in the electronic device 100 or learned through AI. The controller 10 may determine whether the user voice is present in the sensed audio by comparing the sensed audio with the user voice.

When the user voice is detected, the controller 180 may control the electronic device 100 to continue to operate according to the second cooling level and the third power level [S801].

When the user voice is not detected, the controller 180 may measure an ambient noise level of the electronic device 100 from the sensing audio [S807].

The controller 180 may control the electronic device 100 to operate at another cooling level and/or another power level based on the ambient noise level of the electronic device 100.

For example, when the ambient noise level is equal to or greater than a first noise level (e.g., 70 dB), the controller 180 may control the electronic device 100 to operate according to the fourth cooling level and the fourth power level [S809 and S811]. The electronic device 100 is used in a noisy place, and thus the user becomes insensitive to noise of the cooling module, and therefore, the controller 180 may increase the cooling level and the power level to improve the performance of the electronic device 100.

When the ambient noise level is less than the second noise level (e.g., 30 dB), the controller 180 may control the electronic device 100 to operate according to the second cooling level and the first or second power level [S813 and S815]. The electronic device 100 is used in a quiet place, and thus the user becomes sensitive to noise of the cooling module, and therefore, the controller 180 may increase the cooling level and the power level to reduce the noise of the electronic device 100.

When the ambient noise level is equal to or higher than the second noise level and lower than the first noise level, the electronic device 100 may be controlled to continue to operate according to the second cooling level and the third power level [S817 and S801].

Operation S805 above may be omitted. That is, the controller 180 may distinguish the type of sound through deep learning, define ambient noise (e.g., noise of people talking around or car noise) excluding a user voice, and control the electronic device 100 to operate at another cooling level and/or another power level based on the size of the defined ambient noise.

When an application for video conferencing is executed on the electronic device 100, the controller 180 may prevent adjustment of the cooling level and/or power level according to FIG. 8 from being executed.

The cooling level and/or power level for the electronic device 100 determined as such may be readjusted depending on another second condition (a mounting state of the electronic device). For example, the cooling level and/or power level for the electronic device 100 may be adjusted depending on whether the user uses the electronic device 100 by placing the electronic device 100 on a desk, table, or stand, or whether the user holds the electronic device 100 in his/her hand or on his/her lap. In a usage environment in which the user is in contact with the electronic device on the human body, such as the lap, rather than placing on a desk or table., the user may be more likely to use the electronic device for low-spec programs (e.g., document editing programs) rather than high-spec programs (e.g., high-definition video editing programs or high-definition gaming programs). The user may be sensitive to a surface temperature of the electronic device in the usage environment in which the user is in contact with the human body, and even a slight increase in surface temperature may cause discomfort. Therefore, there is no need to increase the power level in the usage environment in which the user is in contact with the human body.

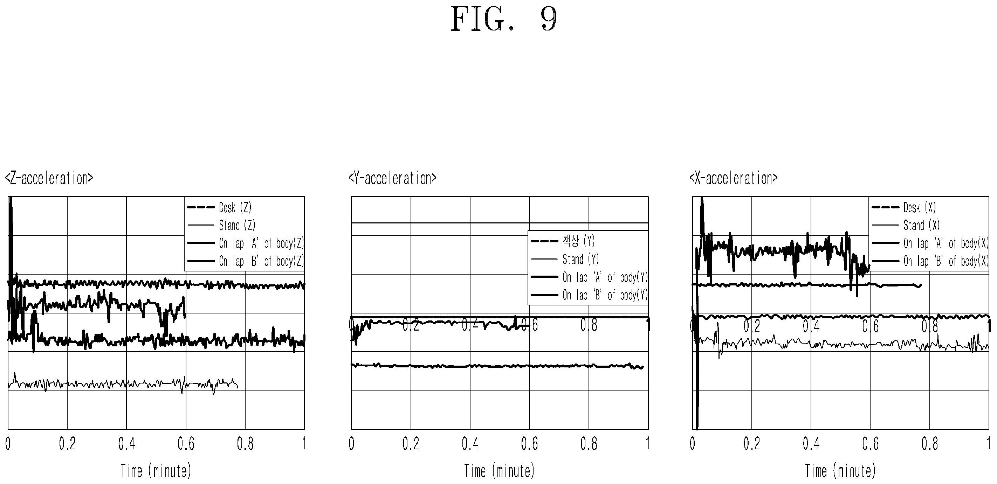

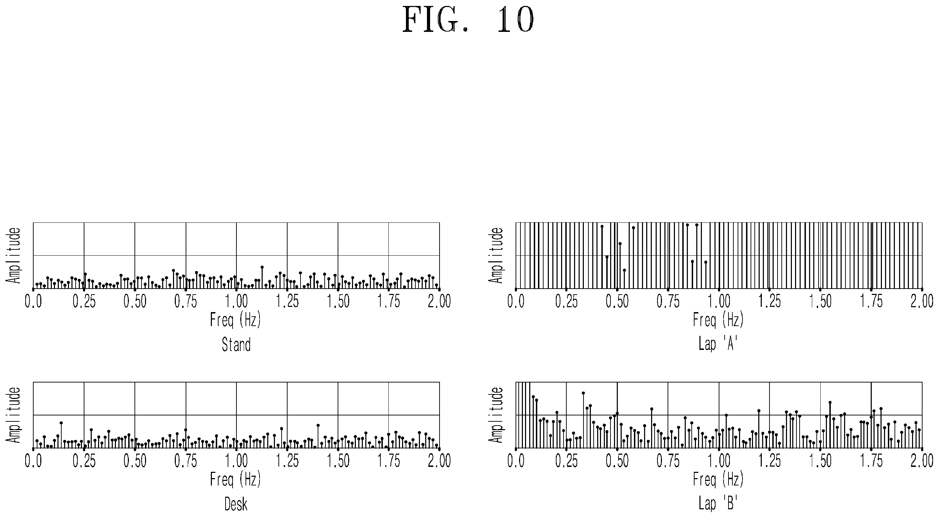

First, determination of a mounting state of the electronic device 100 will be explained with further reference to FIGS. 9 and 10. FIGS. 9 and 10 are graphs showing acceleration values of an electronic device according to a mounting state.

The controller 180 may distinguish whether the electronic device 100 is used in a fixed mounting state such as a desk, table, or stand, or in a non-fixed mounting state such as the user lap by using acceleration value sensed by an acceleration sensor of the sensing unit 140.

As shown in FIG. 9, when the electronic device 100 is in a fixed mounting state, acceleration values of X, Y, and Z are maintained at relatively constant values, and when the electronic device 100 is moved or in a non-fixed mounting state, the acceleration values of X, Y, and Z may change by a relatively large amount. When the electronic device is placed on the lap instead of in a fixed mounting state, a degree of shaking increases due to typing and muscle movement based on the characteristics of human use, and a change in acceleration value increases when placed on the lap compared to when placed in the fixed mounting state. As seen from FIG. 10, when data of such acceleration values are frequency converted, the acceleration values are relatively significantly large in various frequency ranges.

Therefore, the controller 180 may distinguish the mounting state of the electronic device 100 based on the acceleration value. For example, the controller 180 may distinguish the mounting state of the electronic device 100 by comparing the sum of the acceleration values of X, Y, and Z measured over a certain period of time with a predefined reference value (e.g., 0.5) in a specific band of the frequency domain (e.g., a band of 2 Hz or less) when the sum is frequency-transformed (FFT). The controller 180 may determine that the electronic device 100 is in a non-fixed mounting state if the sum of the acceleration values is greater than or equal to the reference value, and that the electronic device 100 is in a fixed mounting state if the sum of the acceleration values is less than the reference value.

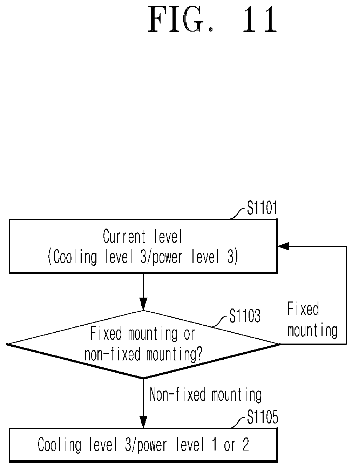

Hereinafter, with reference to FIG. 11, adjustment of the cooling level and/or power level of the electronic device 100 will be explained according to the second condition of the electronic device 100. FIG. 11 is a flowchart for adjusting a cooling level of a cooling module and/or a power consumption level of a CPU, which is to be applied to an electronic device, based on a second condition according to an aspect of the present disclosure.

As described above, it is assumed that the third cooling level and the third power level are determined for the electronic device 100 [S1101].

The controller may determine the mounting state of the electronic device 100 based on the acceleration value of the electronic device 100 sensed as described with reference to FIGS. 9 and 10 [S1103].

When determining that the electronic device 100 is in a fixed mounting state, the controller 180 may control the electronic device 100 to continue to operate according to the third cooling level and the third power level [S1101].

However, when determining that the electronic device 100 is in a non- fixed mounting state, the controller 180 may control the electronic device 100 to operate according to the third cooling level and the first or second power level [S1105]. That is, the power level may be lowered while the cooling level is maintained. However, the present disclosure is not limited thereto. The cooling level may be increased.

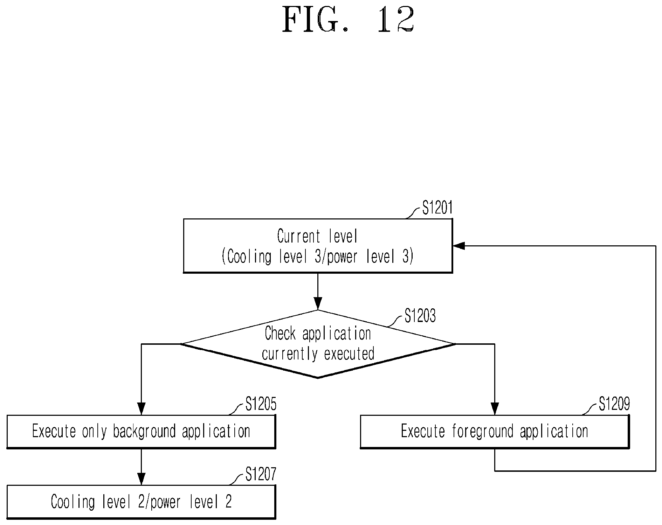

The cooling level and/or power level for the electronic device 100 determined as such may be readjusted depending on another third condition (type of application that is currently executed). For example, in the electronic device 100, background applications (e.g., OS update applications or security applications) may be executed at a specific zone (e.g., at night). In this case, when noise of the electronic device 100 becomes loud, it may disturb a sleeping user. Accordingly, when only a background application is executed in the electronic device 100, the power level of the electronic device 100 does not need to be maintained without change, and the cooling level also needs to be lowered. The adjustment of the cooling level and/or power level for the electronic device 100 according to the third condition will be further described with reference to FIG. 12. FIG. 12 is a flowchart for adjusting a cooling level of a cooling module and/or a power consumption level of a CPU, which is to be applied to an electronic device, based on a third condition according to an aspect of the present disclosure.

As described above, it is assumed that the third cooling level and the third power level are determined for the electronic device 100 [S1201].

The controller 180 may check the application currently executed in the electronic device 180 [S1203].

When the application currently executed in the electronic device 180 is only a background application, the controller 180 may control the electronic device 100 to operate at the second cooling level and the second power level [S1205 and S1207]. That is, the electronic device 180 may lower at least one of the cooling level or the power level.

When the application currently executed in the electronic device 180 includes a foreground application, the controller 180 may control the electronic device 100 to continue to operate at the third cooling level and the third power level [S1209 and S1201].

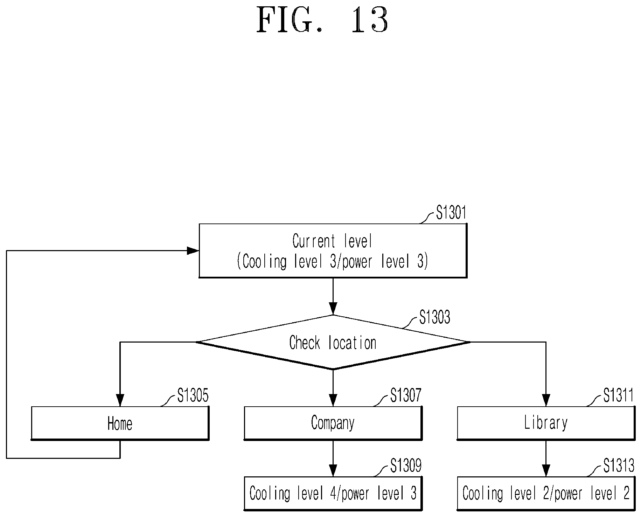

The cooling level and/or power level for the electronic device 100 determined as such may be readjusted depending on another fourth condition (location of the electronic device). For example, when the electronic device 100 is used in a quiet place such as a library, it is important to reduce noise even if the performance is somewhat reduced. When the electronic device 100 is used in a work place such as a company, it may be desirable to improve performance even if there is some noise. The adjustment of the cooling level and/or power level for the electronic device 100 according to the fourth condition will be further described with reference to FIG. 13. FIG. 13 is a flowchart for adjusting a cooling level of a cooling module and/or a power consumption level of a CPU, which is to be applied to an electronic device, based on a fourth condition according to an aspect of the present disclosure.

As described above, it is assumed that the third cooling level and the third power level are determined for the electronic device 100 [S1301].

The controller 180 may check the current location of the electronic device 100 [S1303]. The current location may be identified through the location information module 115.

When the location of the electronic device 100 is identified as a first location (e.g., home), the controller 180 may control the electronic device 100 to continue to operate at the third cooling level and the third power level [S1305 and S1301].

When the location of the electronic device 100 is identified as a second location (e.g., company), the controller 180 may control the electronic device 100 to operate at the fourth cooling level and the third power level [S1307 and S1309]. In some cases, the power level may also increase as the cooling level increases.

When the location of the electronic device 100 is identified as a third location (e.g., company), the controller 180 may control the electronic device 100 to operate at the second cooling level and the second power level [S1311 and S1313]. In some cases, the power level may be maintained even if the cooling level is lowered.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the electronic device

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. An electronic device comprising:
a controller including a central processing unit (CPU);
a board equipped with the CPU;
a cooling module;
a temperature sensor configured to sense a CPU temperature and a board temperature; and
a battery, wherein the controller is configured to differently determine at least one of a power level regarding power consumption of the CPU or a cooling level regarding cooling performance of the cooling module depending on a charging state of the battery.

2. The electronic device of claim 1, wherein the controller is configured to perform control, when the board temperature exceeds a first temperature and the CPU temperature exceeds a second temperature higher than the first temperature, to adjust at least one of the power level of the CPU or the cooling level of the cooling module.

3. The electronic device of claim 2, wherein the controller is configured to perform control, when the CPU temperature exceeds the second temperature for a first time interval or longer, to adjust at least one of the power level of the CPU or the cooling level of the cooling module.

4. The electronic device of claim 1, wherein the controller is configured to perform control to differently adjust at least one of the power level of the CPU or the cooling level of the cooling module depending on whether the electronic device is in a charging mode or a non-charging mode.

5. The electronic device of claim 4, wherein the controller is configured to perform control, when the electronic device is in the charging mode, to differently adjust at least one of the power level or the cooling level of the cooling module according to a charging level of the battery.

6. The electronic device of claim 5, wherein the cooling level is adjusted to be inversely proportional to the charging level of the battery, and the power level is adjusted to be proportional to the charging level of the battery.

7. The electronic device of claim 2, wherein the controller is configured to perform control, when the board temperature exceeds a third temperature between the first temperature and the second temperature and the CPU temperature exceeds the second temperature for a second time interval longer than a first time interval, to further adjust at least one of the power level of the CPU or the cooling level of the cooling module.

8. The electronic device of claim 1, further comprising a microphone configured to measure ambient noise, wherein the controller is configured to perform control to further adjust at least one of the power level of the CPU or the cooling level of the cooling module according to a size of the ambient noise.

9. The electronic device of claim 8, wherein the ambient noise does not include a user voice recognized through artificial intelligence learning.

10. The electronic device of claim 8, wherein the cooling level and the power level are adjusted in proportion to the size of the ambient noise.

11. The electronic device of claim 1, further comprising an acceleration sensor configured to sense an acceleration value of the electronic device, wherein the controller is configured to perform control to further adjust at least one of the power level of the CPU or the cooling level of the cooling module according to a mounting state of the electronic device determined based on the acceleration value.

12. The electronic device of claim 12, wherein, when the acceleration value is greater than or equal to a reference value, the power level is adjusted to be lowered.

13. The electronic device of claim 1, wherein the controller is configured to perform control to further adjust at least one of the power level of the CPU or the cooling level of the cooling module according to a type of an application currently executed.

14. The electronic device of claim 14, wherein, when only a background application is executed, at least one of the cooling level or the power level is adjusted to be lowered.

15. The electronic device of claim 1, wherein the controller is configured to perform control to further adjust at least one of the power level of the CPU or the cooling level of the cooling module according to a location of the electronic device.

16. A method of controlling an electronic device, the method comprising:
sensing a central processing unit (CPU) temperature of a CPU and a board temperature of a board equipped with the CPU;
checking a charging state of a battery; and
differently determining at least one of a power level regarding power consumption of the CPU or a cooling level regarding cooling performance of the cooling module depending on the charging state of the battery.

17. The method of claim 16, further comprising performing control to differently adjust at least one of the power level of the CPU or the cooling level of the cooling module depending on whether the electronic device is in a charging mode or a non-charging mode.

18. The method of claim 16, further comprising:
measuring ambient noise; and
performing control to further adjust at least one of the power level of the CPU or the cooling level of the cooling module according to a size of the ambient noise.

19. The method of claim 16, further comprising:
sensing an acceleration value of the electronic device; and
performing control to further adjust at least one of the power level of the CPU or the cooling level of the cooling module according to a mounting state of the electronic device determined based on the acceleration value.

20. The method of claim 16, wherein the controller is configured to perform control to further adjust at least one of the power level of the CPU or the cooling level of the cooling module according to a type of an application currently executed.
